# EUROPÄISCHE PATENTSCHRIFT

(11) **EP 1 656 669 B1**
(45) Veröffentlichungstag und Bekanntmachung des Hinweises auf die Patenterteilung: **08.10.2008**
(21) Anmeldenummer: 04764041.2
(22) Anmeldetag: 12.08.2004
(51) Int. Cl.: G11B 7/24, G11B 23/40, B32B 27/08, B42F 5/00

(54) **VERWENDUNG VON ADHÄSIONSFOLIEN ZUM BEFESTIGEN UND GLEICHZEITIGEM ABDECKEN UND SCHÜTZEN VON OPTISCHEN SPEICHERMEDIEN**
USE OF CLING FILMS FOR THE FIXATION AND SIMULTANEOUS COVERING AND PROTECTION OF OPTICAL STORAGE MEDIA
UTILISATION DE FILMS ADHESIFS POUR LA FIXATION ET LA COUVERTURE ET LA PROTECTION SIMULTANEES DE MOYENS DE STOCKAGE OPTIQUES

(30) Priorität: 15.08.2003 DE 10338134
(43) Veröffentlichungstag der Anmeldung: 17.05.2006
(73) Patentinhaber: tesa AG, 20253 Hamburg (DE)
(72) Erfinder: BÖHMER, Carsten, 22527 Hamburg (DE); HESSE, Philippe, 21244 Buchholz (DE); HOPPE, Nataly, 268836 Singapore (SG); SCHÜMANN, Uwe, 25421 Pinneberg (DE); SUNARTO, Sianty, Singapore 270002 (SG)
(74) Vertreter: Stubbe, Andreas
(86) Internationale Anmeldenummer: PCT/EP2004/009037
(87) Internationale Veröffentlichungsnummer: WO 2005/017887

(56) Entgegenhaltungen:
- EP-A- 0 896 329
- AU-B- 716 870
- DE-A- 10 001 160
- US-A- 4 896 027
- US-A1- 2001 033 915
- US-A1- 2003 030 559
- PATENT ABSTRACTS OF JAPAN Bd. 2003, Nr. 03, 5. Mai 2003 (2003-05-05) & JP 2002 334538 A (YOSHIMURA AKIHIRO; MATSUMOTO MASAKO; EGUCHI HIROSHI; NISHIDA TSUKASA;), 22. November 2002 (2002-11-22)
- PATENT ABSTRACTS OF JAPAN Bd. 2003, Nr. 07, 3. Juli 2003 (2003-07-03) & JP 2003 077243 A (FUJI SEAL INC), 14. März 2003 (2003-03-14)
- PATENT ABSTRACTS OF JAPAN Bd. 2002, Nr. 05, 3. Mai 2002 (2002-05-03) & JP 2002 008268 A (ASAHI PRINTING & PACKAGING CO LTD), 11. Januar 2002 (2002-01-11)

## Beschreibung

Die Erfindung betrifft die Verwendung einer Adhäsionsfolie, vorzugsweise in Form von Stanzlingen oder geschnittenen Formteilen für das Befestigen, für das gleichzeitige Abdecken und Schützen sowie für das rückstands- und beschädigungsfreie Wiederablösen von sowohl biegsamen als auch nicht biegsamen optischen Speichermedien zum Beispiel des CD-, CD-ROM- oder DVD-Typs auf im Wesentlichen planen sowie im Falle von biegsamen Speichermedien auch auf leicht gekrümmten beziehungsweise gebogenen Oberflächen.

Nicht biegsame optische Speichermedien werden heutzutage üblicherweise in Schutzhüllen beziehungsweise Schutzverpackungen transportiert und aufbewahrt. Teilweise werden einfache Hüllen aus Papier- oder Pappe verwendet, oft aber auch komplizierter gebaute Kunststoffhüllen beziehungsweise aufklappbare Kunststoffschachtein verschiedener Formen und Größen. Wesentlicher Sinn und Zweck dieser Verpackungs- beziehungsweise Aufbewahrungsformen ist der Schutz der optischen Speichermedien vor Verschmutzung, Beschädigung oder Bruch.
Nachteilig sind die durch das Verpackungsmaterial selbst und die durch den Verpackungsprozess hervorgerufenen Kosten sowie der durch das Volumen des Verpackungsmaterials entstehende hohe Platzbedarf im Vergleich zum Platzbedarf eines unverpackten optischen Speichermediums, insbesondere im Falle der Verwendung der relativ voluminösen Kunststoffverpackungen.

Biegsame beziehungsweise flexible optische Speichermedien wie etwa des CD-, CD-ROM- oder DVD-Typs sind zum Beispiel aus WO 01/52252 A1 bekannt. Derartige Speichermedien bestehen in ihrem Produktaufbau aus einer Kunststoff-Trägerfolie, typischerweise aus der Gruppe der Polyester oder Polycarbonate, einer darauf aufgebrachten Sol-Gel-Schicht oder alternativ einer Schicht aus einem Photopolymer, optional einer weiteren Metallisierungsschicht und einer optionalen zusätzlichen Schutzlackschicht.
Im Gegensatz zu einer herkömmlichen CD werden die Informationen nicht durch die Kunststoff-Trägerfolie hindurch a usgelesen, sondern von der entgegengesetzten Seite, durch die Schutzlackschicht hindurch in die metallisierte Sol-Gel-Schicht oder alternativ in das metallisierte Photopolymer.

Derartige Speichermedien können sich dank ihrer Biegsamkeit beziehungsweise Flexibilität an die Oberflächen vieler Gegenstände des täglichen Gebrauchs beziehungsweise an deren Verpackungen wie zum Beispiel Dosen, Getränkedosen, Flaschen, Beutel, Tüten, Schachteln, Kartons oder Kisten usw. anpassen, was prinzipiell die Möglichkeit eröffnet, sie zum Beispiel als Informations- und Werbeträger Platz sparend und ohne großen Aufwand zu den Zielpersonen zu transportieren. Hinsichtlich der genauen Art, wie eine solche Befestigung flexibler Speichermedien an Gegenständen oder Verpackungen bewerkstelligt werden kann, sind noch keine Vorschläge bekannt.

In jedem Fall ist die Ausleseseite, also die Polycarbonat-Trägerschicht bei nicht biegsamen herkömmlichen optischen Speichermedien, die Schutzlackschicht bei flexiblen optischen Speichermedien, besonders vor mechanischen oder sonstigen schädigenden Einflüssen zu schützen.

Adhäsionsfolien (englisch: cling films oder static cling films) sind in vielfältiger Weise bekannt. In GB 2 128 199 A werden beispielsweise Polyolefin-Zusammensetzungen mit möglichen Alpha-Olefin-Anteilen sowie in WO 98/39157 A1 mit Anteilen an Styrol-Blockcopolymeren zur Erzielung der Adhäsionseigenschaften vorgeschlagen. Polyolefin-Zusammensetzungen sowie Zusammensetzungen, die Ethylenvinylacetat-Copolymere enthalten, sind auch in WO 99/14261 A1 beschrieben. In WO 98/39157 A1 werden weiterhin verschiedene thermoplastische Elastomere erwähnt, zum Beispiel Copolyester, Polyurethane und Polyamide.
Aus einer Reihe von Schriften sind Adhäsionsfolien aus weich gemachtem PVC oder anderen weichgemachten Polymeren bekannt. Beispiele sind in US 5,698,621 A, GB 2 368 300 A, DE 202 08 094 U, DE 100 12 261 A1, WO 01/68364 A1 oder WO 97100772 A1 zu finden. In US 5,292,560 A werden Adhäsionsfolien auf Basis Polyethylacrylat beschrieben.
Die Adhäsionsfolien können neben Weichmachern auch Tackifierharze enthalten. In US 5,292,560 werden zum Beispiel Terpen-Harze, Alkalimetallstearate, hydrierte Kolophoniumharze, Kolophoniumester und Polybuten erwähnt, in GB 2 128 199 A Tackifierharze basierend auf ataktischem Polypropylen oder Polyisobutylen. Gemäß US 5,948,493 A können Adhäsionseigenschaften auch durch Polyacrylat-Zusätze eingestellt werden. Adhäsionsfolien mit microreplizierter Oberfläche sind aus WO 99165999 A1 bekannt.

Verwendung finden Adhäsionsfolien zum Beispiel als Displayschutz oder zum Anbringen von Informationen an Autoscheiben, zum Beispiel für Preisauszeichnungen.

So schlägt die DE 197 22 627 A1 die Verwendung einer Adhäsionsfolie zum Befestigen von Magnetstreifen- oder Chip-Karten auf einer Unterlage vor, insbesondere einem Papierbogen. Dazu wird ein etikettenartiger Abschnitt einer Adhäsionsfolie, dessen Abmaße nicht größer sind als die Maße der zu verklebenden Magnetstreifen- oder Chip-Karte, mittels einer klebenden Beschichtung auf der Unterlage verklebt, wobei auf der Seite des Abschnitts, der der klebenden Schicht gegenüberliegt, die Magnetstreifen- oder Chip-Karte durch Adhäsionskräfte gehalten wird.
In einer vorteilhaften Ausführungsform besteht die Adhäsionsfolie aus einer Folie aus Polyethylen, Polypropylen, Polyester, PVC oder Mischungen davon, wobei die Adhäsionsfolie eine Dicke aufweist von 0,03 mm bis 0,1 mm, insbesondere 0,07 mm.

In der US 2003/0030559 A1 wird ein Etikett offenbart, das nicht dazu dient, ein optisches Speichermedium wie CD oder DVD auf andere Gegenstände zu kleben. Stattdessen wird ein Etikett auf eine CD geklebt.

Der in der US 4,896,027 A beschriebene Klebestreifen dient ebenfalls nicht dazu, eine CO oder DVD auf andere Gegenstände zu kleben. Stattdessen wird ein kleiner Speicherträger mit einem Klebstreifen 3a en Film geklebt.

In dem Abstract der JP 2002 334 538 A wird eine miniaturisierte CD auf eine Visitenkarte geklebt, wobei unklar bleibt, wie oder womit die miniaturisierte CD auf der Visitenkarte befestigt wird.

Adhäsionsfolien sind dadurch charakterisiert, dass sie keine oder nur eine sehr geringe fühlbare Klebrigkeit haben, aber dennoch an Gegenständen mit glatter Oberflächen relativ gut haften. Der Hafteffekt (die Adhäsion) wird elektrostatischen Anziehungskräften zugeschrieben. Da elektrostatische Anziehungskräfte auch bei gewöhnlichen Kleb- oder Haftklebstoffen eine Rolle spielen und da die chemischen Zusammensetzungen derAufgabe der Erfindung ist es, eine Möglichkeit zu schaffen, mittels eines Etiketts gezielt Informationen zu verdecken, so daß beispielsweise nach Beschriftung des Etiketts mit einem Laser die vorher (maschinen)lesbaren Inhalte unterhalb des Etiketts nicht mehr Adhäsionsfolienoberflächen sich nicht grundlegend von denen üblicher Kleb- oder Haftklebstoffe unterscheiden, müssen die Unterschiede zwischen einer üblichen Haftklebstoff- und einer Adhäsionsfolienoberfläche als graduell betrachtet werden.

Aufgabe der Erfindung ist es, eine Befestigungsmöglichkeit für den Transport und die Aufbewahrung von sowohl biegsamen als auch nicht biegsamen CDs, CD-ROMs, DVDs und ähnlichen optischen Speichermedien zur Verfügung zu stellen, die die Speichermedien wirksam vor Verschmutzung, Beschädigung, Zerkratzen oder Bruch schützt und die Nachteile des Standes der Technik nicht oder zumindest nicht in dem Ausmaß zeigt.
Insbesondere soll die Transport- und Aufbewahrungsbefestigung leicht und kostengünstig zu bewerkstelligen sein und einen vergleichsweise geringen Platz beanspruchen.

Gelöst wird diese Aufgabe durch die Verwendung einer Adhäsionsfolie, vorzugsweise in Form von Stanzlingen oder geschnittenen Formteilen, wie es im Hauptanspruch niedergelegt ist.
Gegenstand der Unteransprüche sind dabei vorteilhafte Weiterbildungen des Erfindungsgegenstandes.

Demgemäß betrifft die Erfindung die für den Fachmann überraschende und nicht vorhersehbare Tatsache, dass die Verwendung einer Adhäsionsfolie, vorzugsweise in Form von Stanzlingen oder geschnittenen Formteilen für das Befestigen, für das gleichzeitige Abdecken und Schützen sowie für das rückstands- und beschädigungsfreie Wiederablösen von sowohl biegsamen als auch nicht biegsamen optischen Speichermedien zum Beispiel des CD-, CD-ROM- oder DVD-Typs auf im Wesentlichen planen sowie insbesondere im Falle von biegsamen Speichermedien auch auf leicht gekrümmten beziehungsweise gebogenen Oberflächen zu hervorragenden Ergebnissen führt, sofern die Adhäsionsfolien auf sich selbst eine Klebkraft von kleiner 0,3 N/cm bei einem Abzugswinkel von 180°, einer Abzugsgeschwindigkeit von 300 mm/min und einer Verklebungsbreite von 2 cm haben und weiterhin die Adhäsionsfolien auf sich selbst eine Zugscherfestigkeit von größer 0,05 N/mm² bei einer Zuggeschwindigkeit von 300 mm/min und einer Verklebungsfläche von 12,5 x 25 mm² haben.

Die optischen Speichermedien werden vorzugsweise vollflächig mit ihrer Ausleseseite auf die Adhäsionsfolie geklebt, das heißt, es wird ein haftender Kontakt zwischen der Adhäsionsfolie und der Ausleseseite des optischen Speichermediums hergestellt.

Mit ihrer Rückseite kann die das optische Speichermedium durch Adhäsionskräfte tragende Adhäsionsfolie an dem Gegenstand oder dessen Verpackung befestigt werden, der zum Transport oder zur Aufbewahrung des Speichermediums vorgesehen ist.
Dazu wird die Adhäsionsfolie auf ihrer Rückseite bevorzugt mit einem üblichen, mittel bis stark klebenden Haftklebstoff ausgerüstet. In weiteren bevorzugten Ausführungsformen wird die Adhäsionsfolie mit einem üblichen doppelseitigen Klebeband oder mit einem üblichen Klebstoff an dem Gegenstand oder dessen Verpackung befestigt. Daneben sind weitere Befestigungsmöglichkeiten der Adhäsionsfolie an dem Gegenstand oder dessen Verpackung zulässig, ohne den Erfindungsgedanken zu verlassen.

Erfindungsgemäße Adhäsionsfolien haften derart gut auf den Ausleseseiten der optischen Speichermedien, dass eine Ablösung durch eine statische Dauerscherbeanspruchung, wie sie bei Transporten oder auch bei der Aufbewahrung vorkommen kann, im Wesentlichen ausgeschlossen ist. Diese Adhäsionsfolien vermögen bei einer dauerhaften Scherbeanspruchung mehr als das Tausendfache des Gewichts eines üblichen optischen Speichermediums zu halten.

Andererseits lassen sich derartige Adhäsionsfolien sehr leicht von der Ausleseseite der optischen Speichermedien abschälen, so dass die gewollte Ablösung der optischen Speichermedien von der Adhäsionsfolie sehr einfach zu bewerkstelligen ist.

Die Haftung der beschriebenen Adhäsionsfolien auf biegsamen optischen Speichermedien ist ebenfalls ausgezeichnet. Auch hier ist die Haftfestigkeit bei einer dauerhaften Scherbeanspruchung sehr hoch, so dass eine Ablösung bei dieser Beanspruchungsform im Wesentlichen ausgeschlossen ist, während eine Ablösung der biegsamen Speichermedien durch Schälung auch hier leicht möglich ist. Partielle Ablösungen durch Biegen treten erst bei zylindrischen Biegungsradien von kleiner cirka 5 cm auf.

Die genannten Adhäsionsfolien bieten einen wirksamen Schutz der Ausleseseite optischer Speichermedien vor Verschmutzung, Beschädigung, Zerkratzen oder Bruch.

Adhäsionsfolien haben in der besonders vorteilhaften Form von passend zur Fläche des optischen Speichermediums geschnittenen oder gestanzten Formteilen einen verschwindend geringen Platzbedarf. Verpackt wird letztlich nur der Teil des optischen Speichermediums der besonders geschützt werden muss, nämlich die Ausleseseite.

Besonders vorteilhaft können die optischen Speichermedien in Verbindung mit den erfindungsgemäßen Adhäsionsfolien als Beilage eingeklebt in Büchern, Zeitungen, Zeitschriften, auf Dosen, Flaschen usw. an den Kunden gebracht werden.
Weiterhin sind erfindungsgemäße Adhäsionsfolien geeignet zum rückstands- und beschädigungsfrei wiederablösbaren Verkleben von Kundenkarten, Kreditkarten oder ähnliches auf Anschreibebögen zum Versenden der Karten. Erfindungsgemäße Adhäsionsfolien sind allgemein für rückstands- und beschädigungsfrei wiederablösbare Fixierungen leichter Gegenstände, insbesondere mit Oberflächen aus Kunststoff, Metall oder Glas, geeignet.

In einer vorteilhaften Ausführungsform besteht die Adhäsionsfolie aus einer Folie aus Polyethylen, Polypropylen, Polyester, Polyethylenvinylacetat (EVA), weichgemachtem PVC oder Mischungen davon.

Lichtschutzmittel, zum Beispiel UV-Absorber, können optional ebenso eingesetzt werden. Als Lichtschutzmittel finden die bei Gaechter und Müller, Taschenbuch der Kunststoff-Additive, München 1979, bei Kirk-Othmer (3.) 23, 615 - 627, bei Encycl. Polym. Sci. Technol. 14, 125 - 148 und die bei Ullmann (4.) 8, 21; 15, 529, 676 offenbarten Verwendung.

Als Füllstoffe können alle feingemahlenen festen Zusatzstoffe wie zum Beispiel Kreide, Magnesiumcarbonat, Zinkcarbonat, Kaolin, Bariumsulfat, Titandioxid oder Calciumoxid eingesetzt werden. Weitere Beispiele sind Talkum, Glimmer, Kieselsäure, Silikate oder Zinkoxid. Auch Mischungen der genannten Stoffe können verwendet werden.

### Prüfmethoden

Zur Prüfung der Adhäsionsfolien wurden folgende Prüfmethoden herangezogen:

Die Klebkraft der Adhäsionsfolien auf sich selbst (Adhäsionsseite gegen Adhäsionsseite) wurde in Anlehnung an PSTC-101 bestimmt. Nach dieser Methode wurde die Adhäsionsfolie mit ihrer Rückseite auf eine Stahlplatte geklebt. Ein zweites Stück derselben Adhäsionsfolie wurde mit seiner Adhäsionsseite auf die Adhäsionsseite des ersten Stücks fest haftend aufgebracht. Die Überlappungsbreite betrug 2 cm. Anschließend wurde die zweite Folie unter definierten Bedingungen mittels einer Zugprüfmaschine abgezogen. Der Abzugswinkel betrug 180°, die Abzugsgeschwindigkeit 300 mm/min. Die Klebkraft ist die zum Abziehen erforderliche Kraft und wird in der Einheit N/cm angegeben.

Die Zugscherfestigkeit der Adhäsionsfolien auf sich selbst (Adhäsionsseite gegen Adhäsionsseite) wurden in Anlehnung an ISO 4587 bestimmt. Nach dieser Methode wurden zwei Stücke der Adhäsionsfolie jeweils mit ihrer Rückseite auf jeweils eine Prüfstahlplatte geklebt. Die somit auf starren Untergründen befestigten Adhäsionsfolienstücke wurden nun jeweils mit ihrer Adhäsionsseite aufeinander zur Haftung gebracht. Die Überlappungsfläche betrug 12,5 x 25 mm². Anschließend wurde die haftende Überlappung unter definierten Bedingungen mittels einer Zugprüfmaschine mit einer Zuggeschwindigkeit von 300 mm/min getrennt und dabei die Maximalkraft ermittelt. Die Zugscherfestigkeit ist die Maximalkraft bezogen auf die Überlappungsfläche und wird in N/mm² angegeben.

## Patentansprüche

1. Verwendung einer Adhäsionsfolie, vorzugsweise in Form von Stanzlingen oder geschnittenen Formteilen für das Befestigen, für das gleichzeitige Abdecken und Schützen sowie für das rückstands- und beschädigungsfreie Wiederablösen von sowohl biegsamen als auch nicht biegsamen optischen Speichermedien zum Beispiel des CD-, CD-ROM- oder DVD-Typs sowohl auf im Wesentlichen planen sowie insbesondere im Falle von biegsamen Speichermedien auch auf leicht gekrümmten beziehungsweise gebogenen Oberflächen, wobei die Adhäsionsfolie auf sich selbst eine Klebkraft von kleiner 0,3 N/cm bei einem Abzugswinkel von 180°, einer Abzugsgeschwindigkeit von 300 mm/ min und einer Verklebungsbreite von 2 cm hat und weiterhin auf sich selbst eine Zugscherfestigkeit von größer 0,05 N/ mm² bei einer Zuggeschwindigkeit von 300 mm / min und einer Verklebungsfläche von 12,5 x 25 mm² hat.

2. Verwendung einer Adhäsionsfolie nach Anspruch 1, **dadurch gekennzeichnet, dass**
die optischen Speichermedien vollflächig mit ihrer Ausleseseite auf die Adhäsionsfolie geklebt werden.

3. Verwendung einer Adhäsionsfolie nach den Ansprüche 1 oder 2, **dadurch gekennzeichnet, dass**
die Adhäsionsfolie auf ihrer Rückseite mit einem Klebstoff, insbesondere einem mittel bis stark klebenden Haftklebstoff, und/oder mit einem doppelseitigen Klebeband ausgerüstet ist.

4. Verwendung einer Adhäsionsfolie nach zumindest einem der Ansprüche 1 bis 3,
**dadurch gekennzeichnet, dass**
die Adhäsionsfolien zu Formteilen geschnitten oder gestanzt werden, die der Fläche des zu verklebenden optischen Speichermediums angepasst sind.

## Claims

1. Use of a cling film, preferably in the form of punched sections or cut shaped parts, for fixing, for simultaneously covering and protecting, and for removing, without residue or damage, both flexible and inflexible optical storage media of, for example, the CD, CD-ROM or DVD type both on essentially planar surfaces and, in particular in the case of flexible storage media, on slightly curved or arched surfaces as well, the cling film having a bond strength to itself of less than 0.3 N/cm for a take-off angle of 180°, a take-off speed of 300 mm/min and a bonding width of 2 cm and additionally, when applied to itself, the cling film having a tensile shear strength of greater than 0.05 N/mm² for a tension speed of 300 mm/min and a bonding surface area of 12.5 x 25 mm² .

2. Use of a cling film according to claim 1, **characterized in that** the optical storage media are stuck by the full area of their read side to the cling film.

3. Use of a cling film according to claim 1 or 2, **characterized in that** the cling film is equipped on its reverse face with an adhesive, in particular a moderately to strongly adhering pressure-sensitive adhesive, and/or with a double-sided adhesive tape.

4. Use of a cling film according to at least one of claims 1 to 3, **characterized in that** the cling films are punched or cut into shaped parts which are adapted to the surface area of the optical storage medium to be bonded.

## Revendications

1. Utilisation d'une feuille adhésive, de préférence sous forme de pièces poinçonnées ou de pièces façonnées découpées pour la fixation, pour le recouvrement et la protection simultanés ainsi que pour la ré-élimination sans résidus ni dégradations de moyens de sauvegarde optique souples et non souples, par exemple du type CD, CD-ROM ou DVD ainsi que sur des surfaces essentiellement planes ainsi qu'en particulier dans le cas de moyens de sauvegarde souples également sur des surfaces légèrement courbées ou pliées, la feuille adhésive présentant, en soi, une adhésivité inférieure à 0,3 N/cm sous un angle de retrait de 180°, une vitesse de retrait de 300 mm/min et une largeur de collage de 2 cm et en outre, en soi, une résistance au cisaillement par traction supérieure à 0,05 N/mm² à une vitesse de traction de 300 mm/min et une surface de collage de 12,5 x 25 mm².

2. Utilisation d'une feuille adhésive selon la revendication 1, **caractérisée en ce que** les moyens de sauvegarde optique sont collés avec toute leur surface de lecture sur la feuille adhésive.

3. Utilisation d'une feuille adhésive selon les revendications 1 ou 2, **caractérisée en ce que** la feuille adhésive est apprêtée sur sa face arrière avec un adhésif, en particulier un autoadhésif collant moyennement à fortement et/ou avec une bande adhésive double face.

4. Utilisation d'une feuille adhésive selon au moins l'une quelconque des revendications 1 à 3, **caractérisée en ce que** les feuilles adhésives sont découpées ou poinçonnées en pièces façonnées, qui sont adaptées à la surface du moyen de sauvegarde optique à coller.
